# EUROPÄISCHE PATENTSCHRIFT

(11) **EP 2 496 342 B1**
(45) Veröffentlichungstag und Bekanntmachung des Hinweises auf die Patenterteilung: **14.01.2015**
(21) Anmeldenummer: 10776587.7
(22) Anmeldetag: 03.11.2010
(51) Int. Cl.: B01J 19/32

(54) **GEWELLTES PACKUNGSGITTER SOWIE GEORDNETE, AUS MEHREREN PACKUNGSGITTERN AUFGEBAUTE PACKUNG**
CORRUGATED PACKING GRID AND STRUCTURED PACKING ASSEMBLED FROM SEVERAL PACKING GRIDS
GRILLE DE GARNITURE ONDULÉE ET GARNITURE ORDONNÉE, CONSTITUÉE DE PLUSIEURS GRILLES DE GARNITURE

(30) Priorität: 05.11.2009 DE 102009052045
(43) Veröffentlichungstag der Anmeldung: 12.09.2012
(73) Patentinhaber: RVT Process Equipment GmbH, 96349 Steinwiesen (DE)
(72) Erfinder: WOLF, Armin, 96365 Nordhalben (DE); LEHNER, Markus, 96364 Marktrodach (DE); GEIPEL, Werner, 96349 Steinwiesen (DE)
(74) Vertreter: Grünecker, Kinkeldey, Stockmair & Schwanhäusser
(86) Internationale Anmeldenummer: PCT/EP2010/006705
(87) Internationale Veröffentlichungsnummer: WO 2011/054504

(56) Entgegenhaltungen:
- EP-A1- 0 671 207
- DE-A1-102005 011 228

## Beschreibung

Die vorliegende Erfindung betrifft ein gewelltes Packungsgitter mit aufeinanderfolgend angeordneten Wellentälern und Wellenbergen für eine geordnete, aus mehreren Packungsgittern aufgebaute Packung für Gas-Flüssigkeits-Kontaktapparate, wobei im Bereich der Wellentäler des Packungsgitters Elemente angeordnet sind, die sich in die Wellentäler erstrecken. Ferner betrifft die vorliegende Erfindung auch eine geordnete, aus mehreren Packungsgittern aufgebaute Packung.

Gas-Flüssigkeits-Kontaktapparate werden für Rektifikation, Absorption, Desorption und zur Wärmeübertragung in der Prozessindustrie, also beispielsweise der Chemie, der Petrochemie, im Raffineriebereich sowie in der Umwelttechnik verwendet. Ihre technische Bedeutung lässt sich an der Anzahl der betriebenen Apparate verdeutlichen, so werden beispielsweise allein in den USA mehr als 40.000 Destillationskolonnen betrieben, die Zahl der in der Abgasreinigung eingesetzten Absorptionskolonnen liegt deutlich höher.

Um eine hohe Stoffaustauschleistung in diesen Apparaten zu erzielen, muss eine große Grenzfläche zwischen den Phasen realisiert werden. Dabei haben sich in der industriellen Praxis verschiedene Grundtypen von Kontaktelementen etabliert: Böden, z.B. Sieb-, Ventil-, oder Glockenböden, regellose Füllkörperschüttungen sowie geordnete Packungen. Kolonnen mit regellosen Füllkörpern und geordneten Packungen werden unter dem Oberbegriff Packungskolonnen zusammengefasst. In Packungskolonnen überströmt die Flüssigkeit, die durch entsprechende Flüssigkeitsverteiler aufgegeben wird, die Oberfläche der ungeordneten Füllkörperschüttung bzw. der geordneten Packungen. Bei herkömmlichen, in der industriellen Praxis bisher verwendeten geordneten Packungen bildet die Flüssigkeit einen Film auf der Packung und bietet damit dem entgegenströmenden Gas eine große Stoffaustauschfläche. Bei ungeordneten Packungen herrscht meist eine Rinnsalströmung der Flüssigkeit vor.

Geordnete Packungen werden seit mehr als 30 Jahren eingesetzt. Weitgehend durchgesetzt haben sich vertikale, parallele Lagen von gefalteten, dünnen Metallblechen oder Kunststoffflächen, wobei die Faltungen von Lage zu Lage einen wechselnden, aber spiegelgleichen Winkel zur Vertikalen bilden. Ein Packungsbett besteht aus mehreren übereinander liegenden Schichten dieser vertikalen, parallelen Lagen von je etwa 20 cm Höhe, die jeweils um 90° gegeneinander verdreht sind.

Solch eine geordnete Packung ist beispielsweise aus der EP 0 158 917 A2 bekannt. Dabei sind die gefalteten, dünnen Metallbleche mit Schlitzen versehen, die vor dem Falten in das noch flache Metallblech eingebracht und beim Falten aufgespreizt werden. Zudem wird beschrieben, dass Bereiche der Metallbleche ausgeschnitten sind, so dass sie teilweise noch mit dem Metallblech verbunden sind, und nach außen gebogen sind.

Die DE 2 060 178 zeigt eine ähnliche geordnete Packung. Als Material für die einzelnen Elemente der Packung wird Streckmetall eingesetzt, das mit Wellen versehen ist. Aus dem Streckmetall werden Bereiche so ausgeschnitten, dass sie teilweise noch mit dem Streckmetall verbunden sind. Diese Bereiche werden aus dem sie umgebenden Material herausgedrückt, so dass zusätzliche Durchtrittsöffnungen entstehen.

Eine weitere Lage bzw. ein weiteres Einbauelement für eine geordnete Packung ist aus der DE 195 37 690 A1 bekannt. Das Einbauelement weist eine Mehrzahl von Austauschflächen auf, die durch die Oberfläche von wellenförmigen Streifen ausgebildet sind. Die wellenförmigen Streifen sind gegeneinander verschoben, so dass die Wellentäler eines Streifens neben den Wellenbergen der benachbarten Streifen liegen. Dadurch wird eine gleichmäßigere Verteilung der Flüssigkeit in der geordneten Packung erreicht. Nachteilig hierbei ist jedoch, dass eine solche geordnete Packung eine weitgehend geschlossene Plattenstruktur aufweist, und der Queraustausch innerhalb der Packungselemente daher eingeschränkt ist. Aufgrund der resultierenden engen Kanäle in der geordneten Packung reagieren die Packungen empfindlich gegenüber Verschmutzungen. Durch die weitgehend geschlossene Struktur ist ferner die hydraulische Belastbarkeit dieser Packungen begrenzt. Der Materialeinsatz für die Herstellung solcher Packungen und folglich die Produktionskosten sind relativ hoch.

Eine ähnliche geordnete Packung ist aus der FR 2 913 353 bekannt. Die geordnete Packung setzt sich aus gewellten Platten zusammen, wobei durch die Wellen benachbarter Platten Strömungskanäle ausgebildet werden. Aus den gewellten Platten sind Bereiche so ausgeschnitten, dass sie teilweise noch mit der jeweiligen Platte verbunden sind. Diese Bereiche sind aus den Platten herausgebogen und ragen in die Strömungskanäle. In der Draufsicht bilden diese Platten also eine geschlossene Fläche aus und weisen daher zumindest in einer Richtung eine relativ geschlossene Struktur auf.

Aus der DE 197 33 480 A1 ist ferner eine Einbaupackung für Nasskühltürme bekannt. Die Einbaupackung umfasst mehrere nebeneinander angeordnete, gewellte, gitterartige Einbauelemente. Die Einbauelemente umfassen parallele Längsstreben und zickzackförmige parallele Querstreben, die durch die Wellungen gebildete, unter einem Winkel zur Vertikalen verlaufende Kanäle ausbilden. Zwischen je zwei benachbarten Längsstreben und zwei benachbarten Querstreben sind Diagonalstreben angeordnet, die kreuzförmige Versteifungen bilden. Die nebeneinander liegenden Einbauelemente werden verdreht zueinander angeordnet, so dass sich ihre Kanäle kreuzen. Nachteilig bei für Nasskühltürme entwickelten Packungen ist, dass sie auf die spezifischen Anforderungen in den Kühltürmen ausgelegt sind. Die Packungen erzeugen insbesondere bei sehr hohen Gas- und Flüssigkeitsbelastungen vergleichsweise hohe Druckverluste. Die Packungen sind daher für hohe Berieselungsdichten (Flüssigkeitsmenge pro Apparatequerschnittsfläche, in m³/m²h) ungeeignet. Außerdem ist die mechanische Festigkeit dieser Packungen stark eingeschränkt, da Kühltürme nur 1 bis 2 m hohe Packungsbetten aufweisen, während in Gas-Flüssigkeits-Kontaktapparaten in der Prozessindustrie Packungsbetten mit bis zu 10 m Höhe gebräuchlich sind.

Es ist daher die Aufgabe der vorliegenden Erfindung, eine geordnete Packung für GasFlüssigkeits-Kontaktapparate, wie z.B. Stoffaustauschkolonnen, bereitzustellen, die die oben beschriebenen Nachteile der aus dem Stand der Technik bekannten Packungen vermeidet. Insbesondere soll ein Packungsgitter bzw. eine geordnete Packung bereitgestellt werden, die eine große Stoffaustauschfläche bietet, dennoch geringen Druckverlust und hohe Stabilität bzw. hohe mechanische Festigkeit aufweist.

Diese Aufgabe wird erfindungsgemäß dadurch gelöst, dass die Wellenberge und die Wellentäler durch wellenförmige Bänder ausgebildet sind, wobei die wellenförmigen Bänder beabstandet zueinander angeordnet sind und mit quer zu den Bändern verlaufenden Querstreben zu einer offenen Struktur verbunden sind.

Durch die in die Wellentäler ragenden Elemente wird die Oberfläche des Packungsgitters vergrößert. Dadurch wird eine große Kontaktfläche für den Kontakt zwischen Gas und Flüssigkeit und somit eine große Stoffaustauschfläche geschaffen. Bedingt durch die Gitterform des Packungsgitters wird eine offene Struktur geschaffen, die zu einem geringen Druckverlust führt. Durch die aufeinanderfolgend angeordneten Wellentäler und Wellenberge mit den in die Wellentäler ragenden Elementen wird vermieden, dass sich Strömungskanäle in der Packung ausbilden, durch die die Flüssigkeit schnell abfließen würde. Zudem wird eine einfache Herstellung des Packungsgitters ermöglicht. Die Festigkeit des Packungsgitters wird erhöht, insbesondere wird vermieden, dass die Packungsgitter unter Belastung knicken. Das Packungsgitter wird also durch die wellenförmigen Bänder und die quer dazu verlaufenden Querstreben ausgebildet. Durch die offene Struktur des Packungsgitters wird ein guter Queraustausch zwischen benachbarten Packungsgittern und damit eine verbesserte Stoffübergangsleistung einer aus den Packungsgittern zusammengesetzten Packung ermöglicht. Zudem weist eine solche Packung eine hohe hydraulische Kapazität auf, so dass eine sehr hohe Belastung der Packung mit Gas und Flüssigkeit ermöglicht wird. Die offene Struktur der Packungsgitter und damit auch der aus den Packungsgittern hergestellten Packung führt ferner zu einer geringen Empfindlichkeit gegen Verschmutzungen. Auch bei zu Verschmutzungen neigenden Systemen sind somit höhere Standzeiten möglich. Zudem wird der Materialaufwand zur Fertigung der Packungsgitter geringer, wodurch die Herstellkosten relativ niedrig sind.

In einer weiteren vorteilhaften Ausgestaltung kann vorgesehen werden, dass die wellenförmigen Bänder parallel zueinander verlaufen und die quer zu den Bändern angeordneten Querstreben ebenfalls parallel zueinander verlaufen. In den Packungsgittern werden daher durchgehende Wellenberge und Wellentäler erzeugt, entlang derer die Flüssigkeit in einer Film- bzw. Rinnsalströmung geführt wird.

Vorteilhafterweise kann ferner vorgesehen werden, dass die sich in die Wellentäler erstreckenden Elemente in den zwischen den wellenförmigen Bändern liegenden Bereichen des Packungsgitters angeordnet sind. Dadurch werden die in Strömungsrichtung der Flüssigkeit angeordneten freien Flächen verringert, die Stoffaustauschfläche wird vergrößert, es findet ein verbesserter Queraustausch zwischen benachbarten Packungsgittern statt.

In noch einer weiteren Ausführungsform kann vorgesehen werden, dass die sich in die Wellentäler erstreckenden Elemente teilweise als Bügel ausgebildet sind, die sich entgegengesetzt zu den Wellentälern nach außen erstrecken. Dadurch wird die Kontaktfläche des Packungsgitters weiter vergrößert sowie die Stabilität bzw. mechanische Festigkeit erhöht.

Zudem kann vorgesehen werden, dass die sich in die Wellentäler erstreckenden Elemente teilweise als sich zur Vorderseite oder zur Rückseite des Packungsgitters erstreckende Stege ausgebildet sind. Da die sich in die Wellentäler erstreckenden Elemente nur teilweise als Stege ausgebildet sind, sind diese Stege nicht durchgehend, sondern unterbrochen. Durch diese Ausbildung des Packungsgitters wird die gewünschte Strömung im Packungsgitter, nämlich eine Mischung aus Filmströmung und Rinnsalströmung, erreicht. An den Enden der Stege bilden sich Flüssigkeitströpfchen, wodurch die Turbulenz verbessert wird und eine stetige Erneuerung der Phasengrenzfläche erreicht wird. Dies führt zu einem verbesserten Stoff- und Wärmeübergang.

In einer bevorzugten Ausführungsform kann vorgesehen werden, dass die in dasselbe Wellental des Packungsgitters ragenden Bügel und Stege abwechselnd in den zwischen den wellenförmigen Bändern liegenden Bereichen angeordnet sind. In jedem Wellental sind daher abwechselnd Bügel und Stege ausgebildet. Die Bügel sind vorzugsweise schmaler als der Abstand zwischen zwei benachbarten wellenförmigen Bändern. Daher wird ein Abstand zwischen den benachbarten Stegen und Bügeln ausgebildet. Die durch die Packung bzw. das Packungsgitter strömende Flüssigkeit bildet daher an den Enden der Stege Tropfen aus, die von dort auf die Bügel fallen und sich an den Bügeln bzw. anderen Bereichen des Packungsgitters zerschlagen. Wie bereits beschrieben, wird dadurch eine ständige Erneuerung der Phasengrenzfläche, eine verbesserte Turbulenz und verbesserter Stoff- und Wärmeübergang ermöglicht.

Noch eine weitere Ausgestaltung sieht vor, dass die Querstreben die parallelen zueinander verlaufenden wellenförmigen Bänder an den Wellenbergen, den Wellentälern und den zwischen den Wellenbergen und Wellentälern liegenden Wendepunkten verbinden. Dadurch wird die gewünschte offene Struktur des Packungsgitters erhalten.

Eine weitere Vergrößerung der Oberfläche des Packungsgitters sowie eine hohe Stabilität kann dadurch erreicht werden, dass die Querstreben zur Vorderseite und/oder zur Rückseite des Packungsgitters verlängert sind.

Vorzugsweise kann vorgesehen werden, dass die in den Wendepunkten der wellenförmigen Bänder liegenden Querstreben in Richtung zur Vorderseite und zur Rückseite des Packungsgitters verlängert sind. Dadurch ragen diese Querstreben sowohl in die auf der Vorderseite als auch in die auf der Rückseite des Packungsgitters ausgebildeten Wellentäler.

Vorteilhafterweise kann auch vorgesehen werden, dass die an den Wellenbergen bzw. die an den Wellentälern angeordneten Querstreben nur in Richtung zur Rückseite bzw. nur in Richtung zur Vorderseite des Packungsgitters verlängert sind. Auch dies hat den Vorteil, dass die Oberfläche des Packungsgitters vergrößert wird.

Noch eine weitere Ausführungsform sieht vor, dass die im selben Wellental an den Wendepunkten der wellenförmigen Bänder angeordneten Querstreben schräg nach außen in das Wellental ragende Arme aufweisen, die sich mit den Armen der im jeweiligen Wellental gegenüberliegenden Querstreben treffen und die Bügel ausbilden. Diese Arme schließen mit einer senkrecht zur Vorderseite des Packungsgitters verlaufenden Geraden einen Winkel von etwa 30° bis 60° ein. Durch die entstehende Kreuz-Kanalstruktur wird vermieden, dass freie Strömungsquerschnitte auftreten, durch die die Flüssigkeit schnell abströmen könnte. Dennoch weist das Packungsgitter eine durchlässige Struktur auf. Vorzugsweise ragen die Bügel bis zur Vorderseite bzw. bis zur Rückseite des Packungsgitters. Dadurch ist eine gute Verbindung zwischen zwei benachbarten Packungsgittern möglich. Versuche haben gezeigt, dass an diesen Berührpunkten zwischen zwei benachbarten Packungsgittern im Gegensatz zu durch geschlossene Folien ausgebildeten Packungslagen keine Verschlechterung des Strömungsverhaltens, wie beispielsweise eine Flutung, auftritt. Aufgrund der offenen Struktur der Packungsgitter haben diese Berührpunkte keinen negativen Einfluss.

Eine Verbesserung der Stabilität bzw. der mechanischen Festigkeit kann erzielt werden, indem die in den Wellentälern bzw. an den Wellenbergen liegenden Querstreben Stützen aufweisen, die in den Wellentälern in Richtung der Vorderseite bzw. der Rückseite des Packungsgitters ragen und mit den Bügeln verbunden sind.

Vorteilhafterweise kann ferner vorgesehen werden, dass die wellenförmigen Bänder mit einer in der Ebene des Packungsgitters liegenden und senkrecht zur Längserstreckung des Packungsgitters verlaufenden Geraden einen Winkel von etwa 30° bis 60° einschließen und die Querstreben mit dieser in der Ebene des Packungsgitters liegenden und senkrecht zur Längserstreckung des Packungsgitters verlaufenden Geraden einen Winkel von etwa 30° bis 60° einschließen. Versuche haben gezeigt, dass hierdurch ein besonders gutes Strömungsverhalten und somit ein verbesserter Stoff- und Wärmeübergang stattfinden kann. Mit der Ebene des Packungsgitters ist eine parallel zur Vorderseite und Rückseite des Packungsgitters ausgebildete Ebene bezeichnet.

Vorteilhafterweise kann ferner vorgesehen sein, dass das Packungsgitter aus Kunststoff besteht. Hierdurch ist eine einfache Herstellung, beispielsweise durch Spritzgießen möglich.

Ferner bezieht sich die Erfindung auch auf eine geordnete Packung für Gas-Flüssigkeits-Kontaktapparate. Es ist auch hier die Aufgabe der vorliegenden Erfindung, eine geordnete Packung bereitzustellen, die die Nachteile der aus dem Stand der Technik bekannten geordneten Packungen vermeidet und insbesondere eine große Stoffaustauschfläche mit dennoch geringen Druckverlust aufweist und eine hohe mechanische Festigkeit bietet.

Hierzu ist vorgesehen, dass die geordnete Packung eine Mehrzahl von nebeneinander angeordneten, wie oben beschrieben ausgebildeten Packungsgittern aufweist, wobei nebeneinander liegende Packungsgitter jeweils verdreht zueinander angeordnet sind.

Hierdurch wird erreicht, dass die Packung eine große Oberfläche und somit eine große Kontaktfläche zwischen Gas und Flüssigkeit bereitstellt. Dadurch weist die Packung eine große Stoffaustauschfläche auf, der Wärme- und Stoffübergang wird verbessert.

Im Folgenden wird die Erfindung anhand von Zeichnungen näher erläutert. Es zeigen:
- Fig. 1: perspektivische Darstellung eines Packungsgitters und
- Fig. 2: Ansicht des Packungsgitters aus der Richtung II-II in Fig. 1 (Ausschnitt).

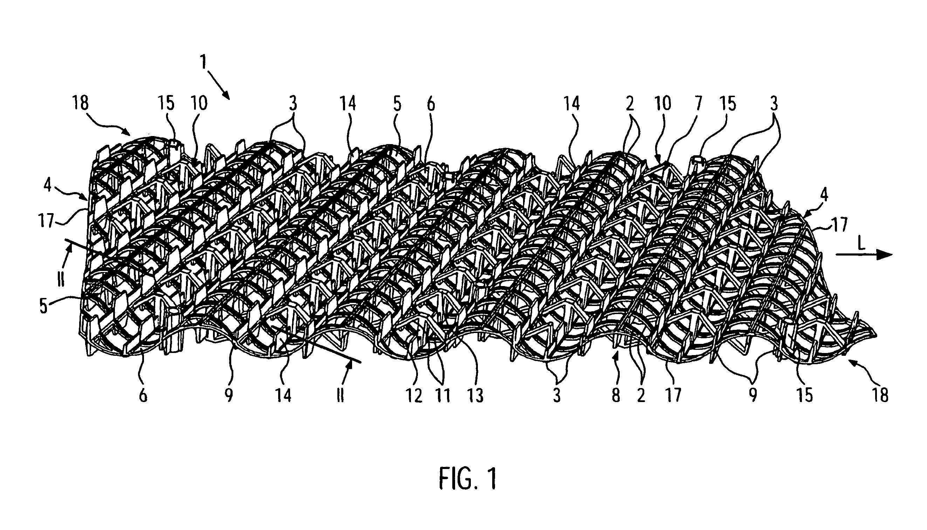

Fig. 1 zeigt eine perspektivische Ansicht des Packungsgitters 1. Das Packungsgitter 1 hat die Grundform einer rechteckigen Platte und weist daher eine Vorderseite 7, eine Rückseite 8, zwei Schmalseiten 4, zwei Längsseiten 18 und eine Dicke d auf. Das Packungsgitter 1 ist gewellt und mit quer zu seiner Längserstreckung L verlaufenden Wellenbergen 5 und Wellentälern 6 versehen. Durch die Wellenberge 5 und die Wellentäler 6 werden Rillen in dem Packungsgitter 1 ausgebildet. Als Material für das Packungsgitter 1 wird vorzugsweise Kunststoff eingesetzt.

Im Folgenden wird die Vorderansicht bzw. die Vorderseite 7 des Packungsgitters 1 beschrieben. Das gewellte Packungsgitter 1 hat eine periodisch wiederkehrende Struktur. D.h. die aufeinanderfolgenden Wellen des Packungsgitters 1 sind im Wesentlichen identisch zueinander ausgebildet. Zudem sind die einzelnen Halbwellen einer Welle des Packungsgitters punktsymmetrisch zum Wendepunkt der Welle. Die Rückseite 8 des Packungsgitters 1 ist daher im Wesentlichen identisch zur Vorderseite 7 ausgebildet. Die Wellenberge der Vorderseite 7 bilden daher die Wellentäler der Rückseite 8 und umgekehrt.

Die Gitterstruktur des Packungsgitters 1 wird durch eine Mehrzahl von wellenförmigen Bändern 2 und quer zu den Bändern 2 verlaufenden Querstreben 3 erzeugt. An den Rändern des Packungsgitters ist ein umlaufender Rahmen 17 ausgebildet. In den Wellentälern 6 des Packungsgitters 1 sind sowohl auf der Vorderseite 7 als auch auf der Rückseite 8 des Packungsgitters 1 Elemente angeordnet, die sich in die Wellentäler 6 erstrecken.

In dem dargestellten Ausführungsbeispiel sind die wellenförmigen Bänder 3 parallel zueinander angeordnet. Somit liegen die Wellenberge nebeneinander liegender wellenförmiger Bänder 2 nebeneinander. Auch die Wellentäler eines wellenförmigen Bandes 2 liegen neben den Wellentälern der benachbarten wellenförmigen Bänder 2. Zudem sind die wellenförmigen Bänder 2 beabstandet voneinander angeordnet. Der Abstand zwischen zwei benachbarten wellenförmigen Bändern 2 ist vorzugsweise immer gleich. Vorzugsweise weisen die wellenförmigen Bänder 2 eine Sinusform auf. Es ist aber auch möglich, dass die Bänder 2 eine andere Wellenform aufweisen.

Die nebeneinander liegenden wellenförmigen Bänder 2 sind über Querstreben 3 miteinander verbunden. Die Querstreben 3 verlaufen vorzugsweise senkrecht zu den wellenförmigen Bändern 2. Die Querstreben 3 sind an den Wellenbergen 5, in den Wellentälern 6 und an den zwischen den Wellenbergen 5 und den Wellentälern 6 angeordneten Wendepunkte 9 der wellenförmigen Bänder 2 angeordnet. Die wellenförmigen Bänder 2 schließen mit einer senkrecht zur Längserstreckung L und parallel zu den Schmalseiten 4 des Packungsgitters 1 verlaufenden Geraden einen Winkel von etwa 30° - 60°, bevorzugt 30°, ein. Die Querstreben 3 bilden mit dieser senkrecht zur Längserstreckung L des Packungsgitters 1 verlaufenden Geraden einen Winkel von etwa 30° - 60°, bevorzugt 30°, aus. Da die Packungsgitter 1 vertikal auf einer der Längsseiten 18 stehend in eine Packungskolonne eingebaut werden, entspricht diese Gerade der Vertikalen.

Die Querstreben 3 sind in Richtung zur Vorderseite 7 und/oder zur Rückseite 8 des Packungsgitters 1 hin verlängert. Die Querstreben 3 sind daher rippenförmig. Die Verlängerungen der Querstreben 3 erstrecken sich im Wesentlichen senkrecht zu einer parallel zur Vorderseite 7 des Packungsgitters 1 verlaufenden Ebene. Durch die Verlängerungen wird die Oberfläche des Packungsgitters 1 vergrößert und die mechanische Festigkeit verbessert. Um die Herstellung der Packungsgitter 1 zu vereinfachen, die Packungsgitter werden vorzugsweise spritzgegossen, verjüngen sich die Querstreben 3 in Richtung zur Vorderseite 7 bzw. zur Rückseite 8.

Die in den Wendepunkten 9 der wellenförmigen Bänder 2 liegenden Querstreben 3.1 erstrecken sich sowohl in Richtung zur Vorderseite 7 als auch in Richtung zur Rückseite 8 des Packungsgitters 1. Die Querstreben 3.3, die auf der Vorderseite 7 des Packungsgitters 1 in den Wellentälern 6 angeordnet sind, erstrecken sich in Richtung der Vorderseite 7 des Packungsgitters in die Wellentäler. Die Querstreben 3.2, die an den Wellenbergen 5 der Vorderseite des Packungsgitters 1 angeordnet sind, erstrecken sich in Richtung der Rückseite 8 des Packungsgitters, so dass sie in die auf der Rückseite 8 des Packungsgitters 1 ausgebildeten Wellentäler ragen.

An dem Packungsgitter 1 sind ferner Bügel 10 ausgebildet, die sich aus den Wellentälern 6 entgegengesetzt zu den Wellentälern 6 nach außen erstrecken. Die Bügel 10 sind mit den Querstreben 3 verbunden und in den zwischen den wellenförmigen Bändern 2 liegenden Bereichen des Packungsgitters 1 angeordnet. Diese Bügel 10 sind vorzugsweise nur in jedem zweiten der zwischen den wellenförmigen Bändern 2 liegenden Bereichen angeordnet. In jedem Wellental 6 erstrecken sich von den an den Wendepunkten 9 der wellenförmigen Bänder 2 angeordneten Querstreben 3.1 Arme 11 in das jeweilige Wellental 6. Die Arme 11 von den beiden, einem Wellental 6 zugeordneten, in den Wendepunkten 9 liegenden Querstreben 3.1 erstrecken sich in dem Wellental 6 nach außen und stoßen mit den jeweils gegenüberliegenden Armen 11 an einem Punkt zusammen. Die Querstrebe 3.3, die in dem entsprechenden Wellental 6 angeordnet ist, weist Stützen 12 auf, die sich aus dem Wellental 6 senkrecht zur Vorderseite 7 des plattenförmigen Packungsgitters 1 nach oben erstreckt und an dem Berührpunkt der beiden im gleichen Zwischenbereich zwischen den wellenförmigen Bändern angeordneten Arme 11 mit diesen verbunden ist. Die Bügel 10 werden somit durch die Arme 11 ausgebildet und durch die Stützen 12 von unten abgestützt. Der Berührpunkt 13 der zwei Arme 11 und der Stütze 12 an der Vorderseite 7 bzw. der Rückseite 8 des Packungsgitters 1 ist jeweils abgeflacht und bildet eine ebene Anlagefläche aus.

Wie bereits beschrieben, sind die durch die Arme 11 und die Stützen 12 ausgebildeten Bügel 10 nur in jedem zweiten der zwischen den wellenförmigen Bändern 2 liegenden Bereichen des Packungsgitters 1 angeordnet. In den anderen Bereichen sind die Querstreben 3 zu vorstehenden Stegen 14 verlängert. Die Stege 14 erstrecken sich senkrecht zur Vorderseite 7 des plattenförmigen Packungsgitters 1. Die Stege 14 weisen voneinander jeweils einen Abstand auf, der dem Abstand der nebeneinander liegenden wellenförmigen Bänder 2 entspricht. In den Wellentälern 6 erstrecken sich die Stege 14 nur etwa bis zur halben Höhe eines Wellentals 6. Die Stützen 12, die von den Querstreben 3, die in den Wellentälern 6 liegen, nach oben bzw. unten ragen, sind schmäler als der Abstand zwischen zwei benachbarten wellenförmigen Bändern 3. Die in den Wellentälern 6 angeordneten Stege 14 weisen daher einen Abstand zu den Stützen 12 auf. Durch die dünnwandigen Stege 14 wird die Oberfläche das Packungsgitters 1 vergrößert, die Stützen 12 sind stabil und erhöhen die mechanische Festigkeit des Packungsgitters 1.

Das Packungsgitter 1 weist benachbart zu seinen Schmalseiten 4 sowie in der Mitte je zwei Klipselemente 15 auf, die mit den Klipselementen 15 eines weiteren Packungsgitters zusammenwirken, so dass mehrere Packungsgitter miteinander zu einer geordneten Packung verbunden werden können.

An den wellenförmigen Bändern 2 sind an den freien Flächen durchgehende Versteifungsrippen angeordnet. Vorzugsweise werden die Packungsgitter aus Kunststoff hergestellt. Durch die Versteifungsrippen wird dann die benötigte Stabilität bzw. mechanische Festigkeit erzielt. Auch an den an den Wellenbergen bzw. in den Wellentälern angeordneten Querstreben sind jeweils an der Außenseite der Packungsgitters solche Versteifungsrippen angeordnet.

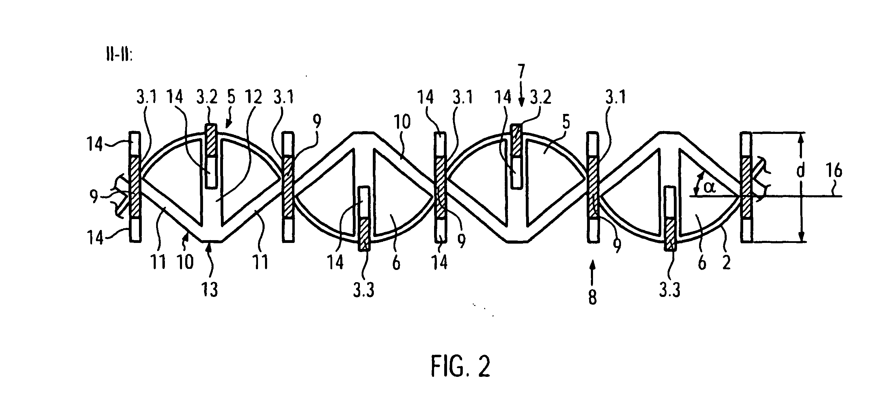

In Fig. 2 ist ein Ausschnitt des Packungsgitters 1 aus Richtung der Linie II-II in Fig. 1 dargestellt. Diese Ansicht ist eine Ansicht parallel zu den wellenförmigen Bändern 2. Die wellenförmigen Bänder 2 sind parallel zueinander angeordnet, liegen somit in der Darstellung der Fig. 2 hintereinander. Durch die Wellenform der Bänder 2 werden die Wellenberge 5 bzw. Wellentäler 6 des gewellten Packungsgitters 1 ausgebildet. Die Wellenberge 5 der Vorderseite 7 des Packungsgitters 1 bilden auf der Rückseite 8 des Packungsgitters 1 Wellentäler aus. Umgekehrt bilden die an der Vorderseite 7 des Packungsgitters 1 angeordneten Wellentäler 6 auf der Rückseite 8 des Packungsgitters 1 Wellenberge aus. Die wellenförmigen Bänder 2 haben im Wesentlichen die Form einer Sinuskurve. Sie können aber auch einen anderen wellenförmigen Verlauf aufweisen. An den Wellenbergen 5, den Wellentälern 6 und den dazwischen liegenden Wendepunkten 9 sind die wellenförmigen Bänder 2 mit Querstreben 3 verbunden.

Wie in Fig. 2 deutlich zu sehen, weist das Packungsgitter 1 Elemente auf, die in die Wellentäler 6 ragen. Dazu sind zum Einen die an den Wendepunkten 9 der wellenförmigen Bänder 2 angeordneten Querstreben 3.1 in Richtung zur Vorderseite 7 als auch zur Rückseite 8 rippenförmig verlängert. Die in den Wellentälern 6 angeordneten Querstreben 3.3 sind in Richtung zur Vorderseite 7 des Packungsgitters rippenförmig verlängert. Ebenso sind die an den Wellenbergen 5 angeordneten Querstreben 3.2 in Richtung zur Rückseite 8 des Packungsgitters 1 rippenförmig verlängert. In jedem zweiten der zwischen den wellenförmigen Bändern 2 liegenden Bereiche des Packungsgitters sind die Querstreben 3 zudem zu den Stegen 14 verlängert. Dies gilt sowohl für die an den Wendepunkten 9 liegenden Querstreben 3.1 als auch für die an den Wellenbergen 5 bzw. die in den Wellentälern 6 liegenden Querstreben 3.2, 3.3.

An den in den Wendepunkten 9 liegenden Querstreben 3.1 sind die Stege 14 sowohl in Richtung zur Vorderseite 7 als auch in Richtung zur Rückseite 8 ausgebildet. Die Stege 14 sind so hoch, dass sie bis zur Vorderseite 7 und bis zur Rückseite 8 des Packungsgitters 1 reichen.

Die an den in den Wellentälern 6 angeordneten Querstreben 3.3 ausgebildeten Stege 14 erstrecken sich in Richtung der Vorderseite des Packungsgitters 1 in etwa bis zur halben Dicke d des Packungsgitters 1. Die an den in den Wellenbergen 5 angeordneten Querstreben 3.2 ausgebildeten Stege 14 erstrecken sich nur in Richtung der Rückseite 8 des Packungsgitters 1 und reichen bis etwa zur halben Dicke des Packungsgitters 1.

Wie bereits beschrieben, sind diese Stege 14 an den Querstreben 3 nur in jedem zweiten, also z.B. im ersten, im dritten, etc., der zwischen den wellenförmigen Bändern 2 liegenden Bereiche des Packungsgitters 1 angeordnet. In den dazwischen liegenden Bereichen, also z.B. im zweiten, im vierten, etc., sind in dem Packungsgitter 1 Bügel 10 ausgebildet. Die Bügel 10 erstrecken sich in die Wellentäler 6 und sind jeweils nach außen, also entgegengesetzt zu den Wellentälern 6, in denen sie angeordnet sind, gewölbt. Die Bügel 10 setzen sich aus den zwei Armen 11 zusammen. Die Arme 11 gehen jeweils von den an den Wendepunkten 9 angeordneten Querstreben 3.1 aus. Die zwei, einander gegenüberliegenden Arme 11 von den zwei, einem Wellental 6 zugeordneten Querstreben 3 erstrecken sich unter einem Winkel in das jeweilige Wellental 6 nach außen und treffen sich dort in einem Berührpunkt 13. Die Arme 11 schließen mit einer parallel zur Vorderseite des Packungsgitters 1 verlaufenden Ebene 16 einen Winkel α in einem Bereich von etwa 30° bis etwa 60° ein.

Ausgehend von den in den Wellentälern 6 bzw. an den Wellenbergen 5 liegenden Querstreben 3.2, 3.3 erstreckt sich die Stütze 12 senkrecht aus dem Wellental 5 heraus und trifft die beiden Arme 11 in dem Berührpunkt 13. Dieser Berührpunkt 13 ist vorzugsweise abgeflacht, so dass benachbart zueinander angeordnete Packungsgitter 11 sich an diesen Berührpunkten 13 abstützen können.

Die Bügel 10, die in den auf der Rückseite 8 des Packungsgitters 1 befindlichen Wellentälern 6 angeordnet sind, sind an den Querstreben 3 in der Höhe leicht versetzt zu den Bügeln 10 angeordnet, welche in den auf der Vorderseite 7 des Packungsgitters 1 befindlichen Wellentälern 6 angeordnet sind. Dadurch werden Unterbrechungen geschaffen, Flüssigkeit, die an den Bügeln entlang rinnt kann auf neue Wege geleitet werden.

Um eine geordnete Packung für Gas-Flüssigkeits-Kontaktapparate herzustellen, werden mehrere der Packungsgitter 1 verdreht nebeneinander angeordnet und mittels der Klipselemente 15 miteinander verbunden. Nebeneinander liegende Packungsgitter 1 werden dabei vorzugsweise um 180° um eine parallel zur Längserstreckung L des Packungsgitters 1 verlaufende Achse gedreht. Damit kreuzen sich die wellenförmigen Bänder 2 und die Querstreben 3 benachbart zueinander angeordneter Packungsgitter 1.

Das Packungsgitter 1 besteht aus Kunststoff. Vorzugsweise wird das Packungsgitter 1 durch Spritzgießen hergestellt.

Die wesentlichen technischen Eigenschaften der Packungsgitter bzw. der daraus hergestellten geordneten Packungen sind die spezifischen Oberflächen (m²/m³), die Einfluss auf die Wärme- und Stoffaustauschleistung nimmt sowie der durch die Packung ausgeübte Widerstand auf die Gas-Flüssigkeits-Gegenströmung, der Einfluss auf den Energieverbrauch (Druckverlust) sowie die hydraulische Kapazität nimmt. Durch eine Veränderung der geometrischen Abmessungen (Breite, Wellenlänge, Amplitude) der wellenförmigen Bänder des Packungsgitters können einfach unterschiedliche spezifische Oberflächen eingestellt werden. Durch die offene Gitterstruktur des Packungsgitters ist der Widerstand auf die Gas-Flüssigkeits-Gegenströmung gering.

Wie oben dargestellt, weist das erfindungsgemäße Packungsgitter 1 eine offene, gewellte Gittergeometrie auf. Dadurch ist der Materialeinsatz für die Herstellung der Packungsgitter erheblich kleiner als für herkömmliche Packungen. Das Packungsgitter ist daher sehr kostengünstig. Die offene Gitterstruktur ermöglicht sehr hohe Belastungen mit Gas und Flüssigkeit, damit weist die Neuentwicklung eine höhere hydraulische Kapazität auf. So sind beispielsweise Gasbelastungen (F-Faktoren = Gasleerrohrgeschwindigkeit multipliziert mit der Quadratwurzel aus der Gasdichte) von bis zu 4 Pa^{0.5} und Berieselungsdichten von bis zu 60 m³/m²h möglich.

Durch die offene Struktur der Packungsgitter wirkt der Übergang zwischen zwei Packungslagen nicht limitierend auf die Gas- und Flüssigkeitsbelastung. Die Empfindlichkeit gegenüber Verschmutzungen ist aufgrund der offenen Struktur erheblich reduziert. Damit kann bei Systemen, die zu Verschmutzungen neigen, eine höhere Standzeit der Packung erreicht werden. Der Queraustausch von Flüssigkeit zwischen den Packungsgittern ist nicht eingeschränkt, was sich positiv auf die Stoffübergangsleistung für die Packung auswirkt. Durch die Gitterstruktur des Packungsgitters mit den in die Wellentäler ragenden Elementen bildet sich die Strömungsform der Flüssigkeit über der Packung als eine Mischung aus Film- und Rinnsalströmung aus. Dadurch wird eine verbesserte Turbulenz und die stetige Erneuerung der Phasengrenzfläche erreicht, was zu einem verbesserten Stoff- und Wärmeübergang führt. Die aus den Packungsgittern hergestellte geordnete Packung kann beim Apparatehersteller bereits in die liegende Kolonne integriert werden, was Montagekosten auf der Baustelle sowie Transportkosten für die Packungselemente selbst einspart.

Geordnete Packungen aus den gewellten Packungsgittern können beispielsweise in Luftkühler für Luftzerlegungsanlagen, in Wäschern, insbesondere zur Abluft- bzw. Abgasreinigung, in Strippern, insbesondere zur Trink- und Grundwasseraufbereitung und in Absorber und Stripper in chemischen Produktionsbetrieben wie Chloralkalianlagen oder bei der Vinylchlorid-Produktion eingesetzt werden.

## Patentansprüche

1. Gewelltes Packungsgitter (1) mit aufeinanderfolgend angeordneten Wellentälern (6) und Wellenbergen (5) für eine geordnete, aus mehreren Packungsgittern (1) aufgebaute Packung für Gas-Flüssigkeits-Kontaktapparate, wobei im Bereich der Wellentäler (6) des Packungsgitters (1) Elemente (10, 11, 12, 14) angeordnet sind, die sich in die Wellentäler (6) erstrecken, **dadurch gekennzeichnet, dass** die Wellenberge (5) und die Wellentäler (6) durch wellenförmige Bänder (2) ausgebildet sind, wobei die wellenförmigen Bänder (2) beabstandet zueinander angeordnet sind und mit quer zu den Bändern (2) verlaufenden Querstreben (3) zu einer offenen Struktur verbunden sind.

2. Packungsgitter (1) nach Anspruch 1, **dadurch gekennzeichnet, dass** die wellenförmigen Bänder (2) parallel zueinander verlaufen und die quer zu den Bändern (2) verlaufenden Querstreben (3) ebenfalls parallel zueinander verlaufen.

3. Packungsgitter (1) nach Anspruch 1 oder 2, **dadurch gekennzeichnet, dass** die sich in die Wellentäler (6) erstreckenden Elemente (10, 11, 12, 14) in den zwischen den wellenförmigen Bändern (2) liegenden Bereichen des Packungsgitters (1) angeordnet sind.

4. Packungsgitter (1) nach einem der Ansprüche 1 bis 3, **dadurch gekennzeichnet, dass** die sich in die Wellentäler (6) erstreckenden Elemente teilweise als Bügel (10) ausgebildet sind, die sich entgegengesetzt zu den Wellentälern (5) nach außen erstrecken.

5. Packungsgitter (1) nach einem der Ansprüche 1 bis 4, **dadurch gekennzeichnet, dass** die sich in die Wellentäler (6) erstreckenden Elemente teilweise als sich zur Vorderseite (7) oder zur Rückseite (8) des Packungsgitters (1) erstreckende Stege (14) ausgebildet sind.

6. Packungsgitter (1) nach Anspruch 4 und 5, **dadurch gekennzeichnet, dass** die in dasselbe Wellental (6) ragenden Bügel (10) und Stege (14) abwechselnd in den zwischen den wellenförmigen Bändern (2) liegenden Bereichen angeordnet sind.

7. Packungsgitter (1) nach einem der Ansprüche 2 bis 6, **dadurch gekennzeichnet, dass** die Querstreben (3; 3.1; 3.2; 3.3) die parallel zueinander verlaufenden wellenförmigen Bänder (2) an den Wellenbergen (5), den Wellentälern (6) und den zwischen den Wellenbergen (5) und den Wellentälern (6) liegenden Wendepunkten (9) verbinden.

8. Packungsgitter (1) nach einem der Ansprüche 1 bis 7, **dadurch gekennzeichnet, dass** die Querstreben (3) zur Vorderseite (7) und/oder zur Rückseite (8) des Packungsgitters (1) verlängert sind.

9. Packungsgitter (1) nach Anspruch 7 oder 8, **dadurch gekennzeichnet, dass** sich die in den Wendepunkten (9) der wellenförmigen Bänder (2) liegenden Querstreben (3.1) zur Vorderseite (7) und zur Rückseite (8) des Packungsgitters erstrecken.

10. Packungsgitter (1) nach einem der Ansprüche 7 bis 9, **dadurch gekennzeichnet, dass** sich die an den Wellenbergen (5) bzw. die an den Wellentälern (6) angeordneten Querstreben (3.2; 3.3) nur zur Rückseite (8) bzw. nur zur Vorderseite (7) des Packungsgitters (1) erstrecken.

11. Packungsgitter (1) nach einem der Ansprüche 7 bis 10, **dadurch gekennzeichnet, dass** die im selben Wellental (6) an den Wendenpunkten (9) der wellenförmigen Bänder (2) angeordneten Querstreben (3.1) schräg nach außen in das Wellental ragende Arme (11) aufweisen, die sich mit den Armen (11) der im jeweiligen Wellental gegenüberliegenden Querstrebe (3.1) treffen und die Bügel (10) ausbilden.

12. Packungsgitter (1) nach Anspruch 11, **dadurch gekennzeichnet, dass** die in den Wellentälern (6) bzw. an den Wellenbergen (5) liegenden Querstreben (3.3; 3.2) Stützen (12) aufweisen, die in den Wellentälern (6) zur Vorderseite (7) bzw. zur Rückseite (8) des Packungsgitters (1) ragen und mit den Bügeln (10) verbunden sind.

13. Packungsgitter (1) nach einem der Ansprüche 1 bis 12, **dadurch gekennzeichnet, dass** die wellenförmigen Bänder (2) mit einer in der Ebene des Packungsgitters (1) liegende und senkrecht zur Längserstreckung (L) des Packungsgitters (1) verlaufenden Geraden einen Winkel von etwa 30° bis 60° einschließen und die Querstreben (3) mit der in der Ebene des Packungsgitters (1) liegenden senkrecht zur Längserstreckung (L) des Packungsgitters (1) verlaufenden Geraden einen Winkel von etwa 30° bis 60° einschließen.

14. Packungsgitter (1) nach einem der Ansprüche 1 bis 13, **dadurch gekennzeichnet, dass** das Packungsgitter (1) aus Kunststoff besteht.

15. Geordnete Packung für Gas-Flüssigkeits-Kontaktapparate mit einer Mehrzahl von nebeneinander angeordneten Packungsgittern (1) nach einem der vorangehenden Ansprüche, wobei nebeneinander liegende Packungsgitter (1) jeweils verdreht zueinander angeordnet sind.

## Claims

1. Corrugated packing grid (1) with consecutively arranged wave troughs (6) and wave crests (5) for a structured packing assembled from several packing grids (1) for gas-liquid contacting apparatuses, wherein in the region of the wave troughs (6) of the packing grid (1), elements (10, 11, 12, 14) are arranged which extend into the wave troughs (6), **characterized in that** the wave crests (5) and the wave troughs (6) are formed by wavelike bands (2), wherein the wavelike bands (2) are arranged at distances to each other and are connected to an open structure with cross struts (3) extending transversely to the bands (2).

2. Packing grid (1) according to claim 1, **characterized in that** the wavelike bands (2) extend in parallel to each other and the cross struts (3) extending transversely to the bands (2) also extend in parallel to each other.

3. Packing grid (1) according to claim 1 or 2, **characterized in that** the elements (10, 11, 12, 14) extending into the wave troughs (6) are arranged in the regions of the packing grid (1) lying between the wavelike bands (2).

4. Packing grid (1) according to one of claims 1 to 3, **characterized in that** the elements extending into the wave troughs (6) are partially formed as bows (10) which extend opposite to the wave troughs (5) to the outside.

5. Packing grid (1) according to one of claims 1 to 4, **characterized in that** the elements extending into the wave troughs (6) are partially embodied as webs (14) extending to the front side (7) or to the back side (8) of the packing grid (1).

6. Packing grid (1) according to claims 4 and 5, **characterized in that** the bows (10) and webs (14) projecting into the same wave trough (6) are arranged alternately in the regions lying between the wavelike bands (2).

7. Packing grid (1) according to one of claims 2 to 6, **characterized in that** the cross struts (3; 3.1; 3.2; 3.3) connect the wavelike bands (2) extending in parallel at the wave crests (5), the wave troughs (6), and the reversal points (9) lying between the wave crests (5) and the wave troughs (6).

8. Packing grid (1) according to one of claims 1 to 7, **characterized in that** the cross struts (3) are elongated to the front side (7) and/or to the back side (8) of the packing grid (1).

9. Packing grid (1) according to claim 7 or 8, **characterized in that** the cross struts (3.1) lying in the reversal points (9) of the wavelike bands (2) extend to the front side (7) and to the back side (8) of the packing grid.

10. Packing grid (1) according to one of claims 7 to 9, **characterized in that** the cross struts (3.2; 3.3) arranged at the wave crests (5) or at the wave troughs (6) only extend to the back side (8) or only to the front side (7) of the packing grid (1).

11. Packing grid (1) according to one of claims 7 to 10, **characterized in that** the cross struts (3.1) arranged in the same wave trough (6) at the reversal points (9) of the wavelike bands (2) comprise arms (11) diagonally projecting to the outside into the wave trough which join the arms (11) of the cross strut (3.1) opposed in the respective wave trough and form the bows (10).

12. Packing grid (1) according to claim 11, **characterized in that** the cross struts (3.3; 3.2) lying in the wave troughs (6) or at the wave crests (5), respectively, comprise supports (12) which project in the wave troughs (6) to the front side (7) or to the back side (8) of the packing grid (1) and are connected with the bows (10).

13. Packing grid (1) according to one of claims 1 to 12, **characterized in that** the wavelike bands (2) include an angle of about 30° to 60° with a straight line lying in the plane of the packing grid (1) and extending perpendicularly to the longitudinal extension (L) of the packing grid (1), and the cross struts (3) include an angle of about 30° to 60° with this straight line lying in the plane of the packing grid (1) and extending perpendicularly to the longitudinal extension (L) of the packing grid (1).

14. Packing grid (1) according to one of claims 1 to 13, **characterized in that** the packing grid (1) consists of plastic.

15. Structured packing for gas-liquid contacting apparatuses with a plurality of adjacent packing grids (1) according to one of the preceding claims, wherein adjacent packing grids (1) are arranged each rotated with respect to each other.

## Revendications

1. Grille de garnissage (1) ondulée présentant des creux d'onde (6) et des sommets d'onde (5) agencés de manière successive, destinée à un garnissage ordonné constitué de plusieurs grilles de garnissage (1) pour des appareils contacteurs gaz-liquides, des éléments (10, 11, 12, 14) s'étendant dans les creux d'onde (6) étant agencés dans la zone des creux d'onde (6), **caractérisée en ce que** les sommets d'onde (5) et les creux d'onde (6) sont formés par des bandes (2) de forme ondulée, les bandes (2) de forme ondulée étant agencées à distance les unes des autres et reliées mutuellement en une structure ouverte, au moyen de traverses (3) s'étendant transversalement aux bandes (2).

2. Grille de garnissage (1) selon la revendication 1, **caractérisée en ce que** les bandes (2) de forme ondulée s'étendent parallèlement les unes aux autres, et les traverses (3), qui s'étendent transversalement aux bandes (2), s'étendent également parallèlement les unes aux autres.

3. Grille de garnissage (1) selon la revendication 1 ou la revendication 2, **caractérisée en ce que** les éléments (10, 11, 12, 14) s'étendant dans les creux d'onde (6), sont agencés dans les zones de la grille de garnissage (1) situées entre les bandes (2) de forme ondulée.

4. Grille de garnissage (1) selon l'une des revendications 1 à 3, **caractérisée en ce que** les éléments s'étendant dans les creux d'onde (6) sont en partie réalisés en tant qu'étriers (10), qui s'étendent vers l'extérieur de manière opposée aux creux d'onde (6).

5. Grille de garnissage (1) selon l'une des revendications 1 à 4, **caractérisée en ce que** les éléments s'étendant dans les creux d'onde (6) sont en partie réalisés en tant que nervures (14), qui s'étendent vers le côté avant (7) ou vers le côté arrière (8) de la grille de garnissage (1).

6. Grille de garnissage (1) selon la revendication 4 et la revendication 5, **caractérisée en ce que** les étriers (10) et les nervures (14), qui s'engagent dans le même creux d'onde (6), sont agencés de manière alternée dans les zones situées entre les bandes (2) de forme ondulée.

7. Grille de garnissage (1) selon l'une des revendications 2 à 6, **caractérisée en ce que** les traverses (3; 3.1; 3.2; 3.3) relient les bandes (2) de forme ondulée, qui s'étendent parallèlement les unes aux autres, au niveau des sommets d'onde (5), des creux d'onde (6) et des points d'inflexion (9) situés entre les sommets d'onde (5) et les creux d'onde (6).

8. Grille de garnissage (1) selon l'une des revendications 1 à 7, **caractérisée en ce que** les traverses (3) sont prolongées vers le côté avant (7) et/ou le côté arrière (8) de la grille de garnissage (1).

9. Grille de garnissage (1) selon la revendication 7 ou la revendication 8, **caractérisée en ce que** les traverses (3.1) se situant au niveau des points d'inflexion (9) des bandes (2) de forme ondulée, s'étendent en direction du côté avant (7) et du côté arrière (8) de la grille de garnissage.

10. Grille de garnissage (1) selon l'une des revendications 7 à 9, **caractérisée en ce que** les traverses (3.2; 3.3) agencées respectivement au niveau des sommets d'onde (5) et des creux d'onde (6), s'étendent uniquement vers le côté arrière (8) et respectivement uniquement vers le côté avant (7) de la grille de garnissage (1).

11. Grille de garnissage (1) selon l'une des revendications 7 à 10, **caractérisée en ce que** les traverses (3.1) agencées dans le même creux d'onde (6) au niveau des points d'inflexion (9) des bandes (2) de forme ondulée, présentent des bras (11), qui s'engagent de manière oblique vers l'extérieur dans le creux d'onde, et qui se réunifient avec les bras (11) de la traverse (3.1) opposée dans le creux d'onde respectivement considéré, et forment les étriers (10).

12. Grille de garnissage (1) selon la revendication 11, **caractérisée en ce que** les traverses (3.3; 3.2) situées dans les creux d'onde (6) respectivement au niveau des sommets d'onde (5), présentent des supports d'appui (12) qui, dans les creux d'onde (6) se dirigent vers le côté avant (7) et respectivement vers le côté arrière (8) de la grille de garnissage (1), et qui sont reliés aux étriers (10).

13. Grille de garnissage (1) selon l'une des revendications 1 à 12, **caractérisée en ce que** les bandes (2) de forme ondulée forment un angle d'environ 30° à 60° avec une droite située dans le plan de la grille de garnissage (1) et s'étendant perpendiculairement à la direction longitudinale (L) de la grille de garnissage (1), et les traverses (3) forment avec la droite située dans le plan de la grille de garnissage (1) et s'étendant perpendiculairement à la direction longitudinale (L) de la grille de garnissage (1), un angle d'environ 30° à 60°.

14. Grille de garnissage (1) selon l'une des revendications 1 à 13, **caractérisée en ce que** la grille de garnissage (1) est réalisée en matière plastique.

15. Garnissage ordonné pour des appareils contacteurs gaz-liquides comprenant une pluralité de grilles de garnissage (1) selon l'une des revendications précédentes, agencées les unes à côté des autres, des grilles de garnissage (1) respectivement voisines étant agencées de manière tournée les unes par rapport aux autres.
